# EUROPEAN PATENT APPLICATION

(11) **EP 2 166 476 A1**
(43) Date of publication of application: **24.03.2010**
(21) Application number: 09168823.4
(22) Date of filing: 27.08.2009
(51) Int. Cl.: G06F 21/00

(54) **Mobile terminal capable of preventing virus infection and method of controlling operation of the mobile terminal**

(30) Priority: 19.09.2008 KR 20080092303
(71) Applicant: LG Electronics, Seoul, 150-721 (KR)
(72) Inventor: Kim, Tae Yong, Seoul 153-023 (KR)
(74) Representative: Cabinet Plasseraud

(57) **Abstract**

A method of controlling a mobile terminal, and which includes detecting, via a controller, a suspicious attempt that may have been caused by a virus from the mobile terminal, shutting down the detected attempt, choosing one or more terminals that are associated with the mobile terminal, and notifying, via an alarm unit, said one or more chosen other terminals that the mobile terminal is infected.

## Description

### CROSS-REFERENCE TO A RELATED APPLICATION

This application claims the priority benefit of Korean Patent Application No. 10-2008-0092303, filed on September 19, 2008 in the Korean Intellectual Property Office, the disclosure of which is incorporated herein by reference.

### BACKGROUND OF THE INVENTION

### 1. Field of the Invention

The present invention relates to a mobile terminal and a method of controlling an operation of the mobile terminal for notifying other terminal when the mobile terminal is infected by a virus.

### 2. Description of the Related Art

Mobile terminals are portable devices, which can provide users with various services such as a voice calling service, a video calling service, an information input/output service, and a data storage service. Mobile terminals also provide additional functions such as allowing users to capture photos or moving pictures, play music files or moving image files, play game programs, receive broadcast programs and access wireless Internet services. Thus, mobile terminals now function as multimedia players. The mobile terminals also include various user interface (UI) environments, in which users are allowed to easily search for and choose desired functions.

As the functions of mobile terminals become more complex and diverse, an increasing number of mobile terminals have become more prone to viruses. In addition, the types of viruses that can infect mobile terminals have rapidly grown. Therefore, it is necessary to develop ways to prevent the virus infection of mobile terminals and recover infected mobile terminals.

### SUMMARY OF THE INVENTION

Accordingly, one object of the present invention is to address the above-noted and other problems.

Another object of the present invention is to provide a mobile terminal and a method of controlling an operation of the mobile terminal for notifying other terminals when a mobile terminal is infected by a virus such that the other mobile terminals can perform an antivirus scan remove viruses, if any, detected by the antivirus scan.

To achieve these and other advantages and in accordance with the purpose of the present invention, as embodied and broadly described herein, the present invention provides in one aspect a method of controlling a mobile terminal, and which includes detecting, via a controller, a suspicious attempt that may have been caused by a virus from the mobile terminal, shutting down the detected attempt, choosing one or more terminals that are associated with the mobile terminal, and notifying, via an alarm unit, the one or more chosen other terminals that the mobile terminal is infected.

In another aspect, the present invention provides a mobile terminal including a wireless communication unit configured to wirelessly communicate with at least one other terminal, a controller configured to detect a suspicious attempt that may have been caused by a virus from the mobile terminal, to shut down the detected attempt, and to chose one or more other terminals that are associated with the mobile terminal, and a notifying unit configured to notify the chosen one or more other terminals that the mobile terminal is infected.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The above and other features and advantages of the present invention will become more apparent by describing in detail preferred embodiments thereof with reference to the attached drawings in which:

FIG. 1 is a block diagram illustrating a mobile terminal according to an embodiment of the present invention;

FIG. 2 is a front perspective view of the mobile terminal shown in FIG. 1;

FIG. 3 is a rear perspective view of the mobile terminal shown in FIG. 1;

FIG. 4 is a flowchart illustrating a method of controlling an operation of a mobile terminal according to a first embodiment of the present invention;

FIG. 5 is a flowchart illustrating a method of controlling an operation of a mobile terminal according to a second embodiment of the present invention;

FIG. 6 is a table illustrating a number of mobile terminals to be notified when the mobile terminal shown in FIG. 1 is determined to be infected;

FIGS. 7 and 8 are overviews of multiple mobile terminals for explaining the methods of the first and second embodiments of the present invention; and

FIGS. 9A-9D are overviews of display screens showing how the mobile terminal shown in FIG. 1 can detect and handle viruses.

### DETAILED DESCRIPTION OF THE INVENTION

The present invention will hereinafter be described in detail with reference to the accompanying drawings in which exemplary embodiments of the invention are shown. In addition, a mobile terminal may be a mobile phone, a smart phone, a laptop computer, a digital broadcast receiver, a personal digital assistant (PDA), a portable multimedia player (PMP), or a navigation device.

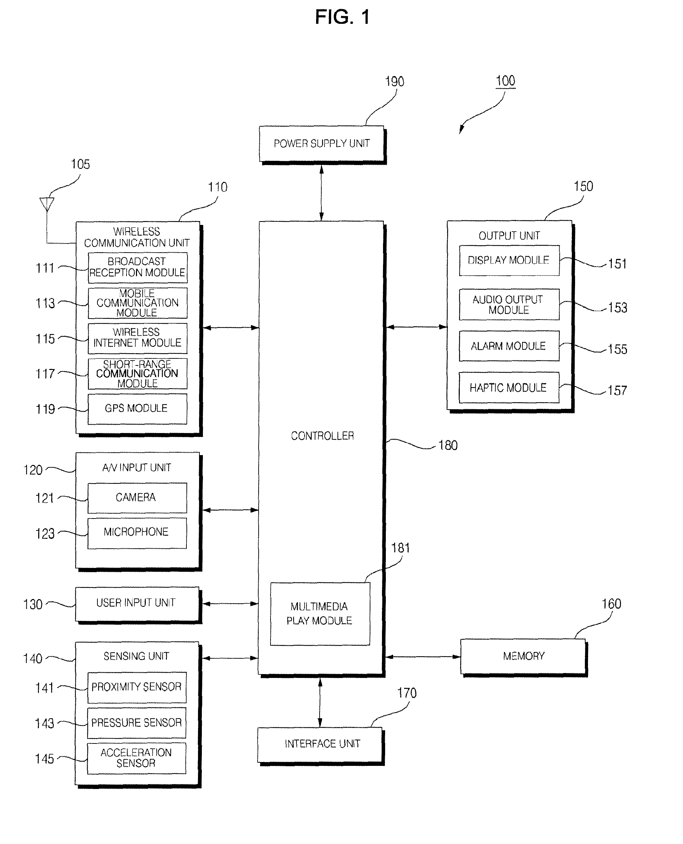

FIG. 1 is a block diagram of a mobile terminal 100 according to an embodiment of the present invention. Referring to FIG. 1, the mobile terminal 100 includes a wireless communication unit 110, an audio/video (A/V) input unit 120, a user input unit 130, a sensing unit 140, an output unit 150, a memory 160, an interface unit 170, a controller 180, and a power supply unit 190. Two or more of the units may be incorporated into a single unit, or some of the units may be divided into two or more smaller units.

Further, as shown, the wireless communication unit 110 includes a broadcast reception module 111, a mobile communication module 113, a wireless Internet module 115, a short-range communication module 117, and a global positioning system (GPS) module 119. The broadcast reception module 111 receives a broadcast signal and/or broadcast-related information from an external broadcast management server through a broadcast channel. The broadcast channel may be a satellite channel or a terrestrial channel. In addition, the broadcast management server may be a server which generates broadcast signals and/or broadcast-related information and transmits the generated broadcast signals and/or the generated broadcast-related information or may be a server which receives and then transmits previously-generated broadcast signals and/or previously-generated broadcast-related information.

Further, the broadcast-related information may include broadcast channel information, broadcast program information and/or broadcast service provider information. The broadcast signal may be a TV broadcast signal, a radio broadcast signal, a data broadcast signal, the combination of a data broadcast signal and a TV broadcast signal or the combination of a data broadcast signal and a radio broadcast signal. The broadcast-related information may be provided to the mobile terminal 100 through a mobile communication network. In this instance, the broadcast-related information may be received by the mobile communication module 113, rather than by the broadcast reception module 111. In addition, the broadcast-related information may come in various forms. For example, the broadcast-related information may be an electronic program guide (EPG) of the digital multimedia broadcasting (DMB) system or may be an electronic service guide (ESG) of the digital video broadcast-handheld (DVB-H) system.

Further, the broadcast reception module 111 can receive the broadcast signal using various broadcasting systems such as the digital multimedia broadcasting-terrestrial (DMB-T) system, the digital multimedia broadcasting-satellite (DMB-S) system, the media forward link only (MediaFLO) system, the DVB-H system, and the integrated services digital broadcast-terrestrial (ISDB-T) system. In addition, the broadcast reception module 111 can be configured to be suitable for nearly all types of broadcasting systems other than those set forth herein. The broadcast signal and/or the broadcast-related information received by the broadcast reception module 111 may also be stored in the memory 160.

Further, the mobile communication module 113 can transmit wireless signals to or receives wireless signals from at least one of a base station, an external terminal, and a server through a mobile communication network. The wireless signals may include various types of data according to whether the mobile terminal 100 transmits/receives voice call signals, video call signals, or text/multimedia messages. In addition, the wireless Internet module 115 is a module for wirelessly accessing the Internet, and may be embedded in the mobile terminal 100 or may be installed in an external device. Also, the wireless Internet module 115 may use various wireless Internet techniques such as wireless fidelity (WiFi), wireless broadband (Wibro), world interoperability for microwave access (Wimax) or high-speed downlink Packet Access (HSDPA).

In addition, the short-range communication module 117 is a module for short-range communication, and can use various short-range communication techniques such as Bluetooth, radio frequency identification (RFID), infrared data association (IrDA), ultra wideband (UWB), and ZigBee. Further, the GPS module 119 receives position information from a plurality of GPS satellites, and the A/V input unit 120 receives audio signals or video signals. Further, in FIG. 1, the A/V input unit 120 includes a camera 121 and a microphone 123. In particular, the camera 121 processes various image frames such as still images or moving images captured by an image sensor during a video call mode or an image capturing mode. The image frames processed by the camera 121 can then be displayed by a display module 151 included in the output unit 150.

Further, the image frames processed by the camera 121 may be stored in the memory 160 or be transmitted to an external device through the wireless communication unit 110. The mobile terminal 100 may also include two or more cameras 121. Also, the microphone 123 receives external sound signals during a call mode, a recording mode, or a voice recognition mode and converts the sound signals into electrical sound data. In the call mode, the mobile communication module 113 converts the electrical sound data into data that can be readily transmitted to a mobile communication base station and then output the data obtained by the conversion. The microphone 123 may also use various noise removal algorithms to remove noise that may be generated during the reception of external sound signals.

In addition, the user input unit 130 generates key input data based on user input for controlling an operation of the mobile terminal 100. The user input unit 130 may be implemented as a keypad, a dome switch, a touch pad (static pressure/static voltage), a jog wheel, or a jog switch. Also, if the user input unit 130 is implemented as a touch pad and forms a layer structure together with the display module 151, the user input unit 130 and the display module 151 may be collectively referred to as a touch screen.

Further, the sensing unit 140 determines a current state of the mobile terminal 100 such as whether the mobile terminal 100 is opened or closed, the position of the mobile terminal 100 and whether the mobile terminal 100 is placed in contact with a user, and also generates a sensing signal for controlling an operation of the mobile terminal 100. For example, when the mobile terminal 100 is a slide-type mobile phone, the sensing unit 140 can determine whether the mobile terminal 100 is opened or closed. In addition, the sensing unit 140 can determine whether the mobile terminal 100 is powered by the power supply unit 190 and whether the interface unit 170 is connected to an external device.

As shown in FIG. 1, the sensing unit 140 includes a proximity sensor 141, a pressure sensor 143, and an acceleration sensor 145. The proximity sensor 141 determines whether there is an entity nearby and approaching the mobile terminal 100 without any mechanical contact with the entity. More specifically, the proximity sensor 141 can detect an entity that is nearby and approaching by detecting a change in an alternating magnetic field or the rate of change of static capacitance. The sensing unit 140 may also include two or more proximity sensors 141.

In addition, the pressure sensor 143 determines whether pressure is being applied to the mobile terminal 100 and detects the magnitude of pressure applied to the mobile terminal 100. The pressure sensor 143 may also be installed in a portion of the mobile terminal 100 in which the detection of pressure is used. For example, the pressure sensor 143 may be installed in the display module 151. In this instance, the display module 151 can differentiate a typical touch input from a pressure touch input, which is generated by applying greater pressure than that used to generate a typical touch input, based on a signal output by the pressure sensor 143. In addition, it is possible to determine the magnitude of pressure applied to the display module 151 upon receiving a pressure touch input based on the signal output by the pressure sensor 143.

Further, acceleration sensors are a type of device for converting an acceleration variation into an electric signal. For example, an acceleration sensor can sense the motion of the human hand during a computer game. Two or three acceleration sensors 145 representing different axial directions may also be installed in the mobile terminal 100. Alternatively, only one acceleration sensor 145 representing a Z axis may be installed in the mobile terminal 100. In addition, the output unit 150 outputs audio signals, video signals and alarm signals. The output unit 150 in FIG. 1 also includes the display module 151, an audio output module 153, an alarm module 155, and a haptic module 157.

The display module 151 can display various information processed by the mobile terminal 100. For example, if the mobile terminal 100 is in a call mode, the display module 151 can display a user interface (UI) or a graphic user interface (GUI) for making or receiving a call. If the mobile terminal 100 is in a video call mode or an image capturing mode, the display module 151 can display a UI or a GUI for capturing or receiving images. In addition, if the display module 151 and the user input unit 130 form a layer structure together and are thus implemented as a touch screen, the display module 151 may be used as both an output device and an input device. If the display module 151 is implemented as a touch screen, the display module 151 may also include a touch screen panel and a touch screen panel controller.

The touch screen panel is a transparent panel attached onto the exterior of the mobile terminal 100 and may be connected to an internal bus of the mobile terminal 100. The touch screen panel also monitors whether the touch screen panel is being touched by the user. Once a touch input to the touch screen panel is detected, the touch screen panel transmits a number of signals corresponding to the touch input to the touch screen panel controller. The touch screen panel controller then processes the signals transmitted by the touch screen panel, and transmits the processed signals to the controller 180. Then, the controller 180 determines whether a touch input has been generated and which part of the touch screen panel has been touched based on the processed signals transmitted by the touch screen panel controller.

In addition, the display module 151 may include an electronic paper (e-paper) display. E-paper is a type of reflective display technology and can provide as high resolution as ordinary ink on paper, wide viewing angles, and excellent visual properties. E-paper may be implemented on any type of substrate such as a plastic, metallic or paper substrate and can maintain an image displayed thereon even when power is cut off. In addition, e-paper can reduce the power consumption of the mobile terminal 100 because it does not require a backlight assembly. The display module 151 may be implemented as e-paper by using electrostatic-charged hemispherical twist balls, using electrophoretic deposition, or using microcapsules, for example.

Further, the display module 151 may include at least one of a liquid crystal display (LCD), a thin film transistor (TFT)-LCD, an organic light-emitting diode (OLED), a flexible display, and a three-dimensional (3D) display. The mobile terminal 100 may also include two or more display modules 151. For example, the mobile terminal 100 may include an external display module and an internal display module. Further, the audio output module 153 outputs audio data received by the wireless communication unit 110 during a call reception mode, a call mode, a recording mode, a voice recognition mode, or a broadcast reception mode or output audio data present in the memory 160. In addition, the audio output module 153 may output various sound signals associated with the functions of the mobile terminal 100 such as receiving a call or a message. The audio output module 153 may also include a speaker and a buzzer.

In addition, the alarm module 155 outputs an alarm signal indicating the occurrence of an event in the mobile terminal 100. Examples of the events include receiving a call signal, receiving a message, and receiving a key signal. Examples of the alarm signal output by the alarm module 155 include an audio signal, a video signal and a vibration signal. More specifically, the alarm module 155 can output a signal upon receiving a call signal or a message. In addition, the alarm module 155 can receive a key signal and output a signal as feedback to the key signal. Therefore, the user can determine whether an event has occurred based on an alarm signal output by the alarm module 155. Further, an alarm signal for alerting the user to the occurrence of an event may be output not only by the alarm module 155 but also by the display module 151 or the audio output module 153.

In addition, the haptic module 157 provides various haptic effects (such as vibrations) that can be perceived by the user. If the haptic module 157 generates vibration as a haptic effect, the intensity and the pattern of vibration generated by the haptic module 157 may be altered in various manners. The haptic module 157 can also synthesize different vibration effects and output the result of the synthesization. Alternatively, the haptic module 157 can sequentially output different vibration effects. The haptic module 157 can also provide various haptic effects, other than vibration, such as a haptic effect obtained using a pin array that moves perpendicularly to a contact skin surface, a haptic effect obtained by injecting or sucking in air through an injection hole or a suction hole, a haptic effect obtained by giving a stimulus to the surface of the skin, a haptic effect obtained through contact with an electrode, a haptic effect obtained using an electrostatic force, and a haptic effect obtained by realizing the sense of heat or cold using a device capable of absorbing heat or generating heat. The haptic module 157 can also be configured to enable the user to recognize a haptic effect using the kinesthetic sense of the fingers or the arms. The mobile terminal 100 may also include two or more haptic modules 157.

In addition, the memory 160 stores various programs used for the operation of the controller 180, and stores various data such as a phonebook, messages, still images, or moving images. The memory 160 may also include at least one of a flash memory type storage medium, a hard disk type storage medium, a multimedia card micro type storage medium, a card type memory (e.g., a secure digital (SD) or extreme digital (XD) memory), a random access memory (RAM), and a read-only memory (ROM). Further, the mobile terminal 100 can operate a web storage, which performs the functions of the memory 160 on the Internet.

In addition, the interface unit 170 interfaces with an external device that can be connected to the mobile terminal 100, and may be a wired/wireless headset, an external battery charger, a wired/wireless data port, a card socket for, for example, a memory card, a subscriber identification module (SIM) card or a user identity module (UIM) card, an audio input/output (I/O) terminal, a video I/O terminal, or an earphone. The interface unit 170 can also receive data from an external device or be powered by an external device. Further, the interface unit 170 can transmit data provided by an external device to other components in the mobile terminal 100 or transmit data provided by other components in the mobile terminal 100 to an external device. Also, if the mobile terminal 100 is connected to an external cradle, power can be supplied from the external cradle to the mobile terminal through the interface unit 170, and various command signals can be transmitted from the external cradle to the mobile terminal through the interface unit 170.

In addition, the controller 180 controls the general operation of the mobile terminal 140. For example, the controller 180 can perform various control operations regarding making/receiving a voice call, transmitting/receiving data, or making/receiving a video call. In FIG. 1, the controller 180 includes a multimedia play module 181, which plays multimedia data. The multimedia play module 181 may be implemented as a hardware device and be installed in the controller 180. Alternatively, the multimedia play module 181 may be implemented as a software program. Further, the power supply unit 190 can be supplied with power by an external power source or an internal power source and can supply power to the other components in the mobile terminal 100. The mobile terminal 100 may also include a wired/wireless communication system and a satellite-based communication system, and be configured to be able to operate in a communication system transmitting data as frames or packets.

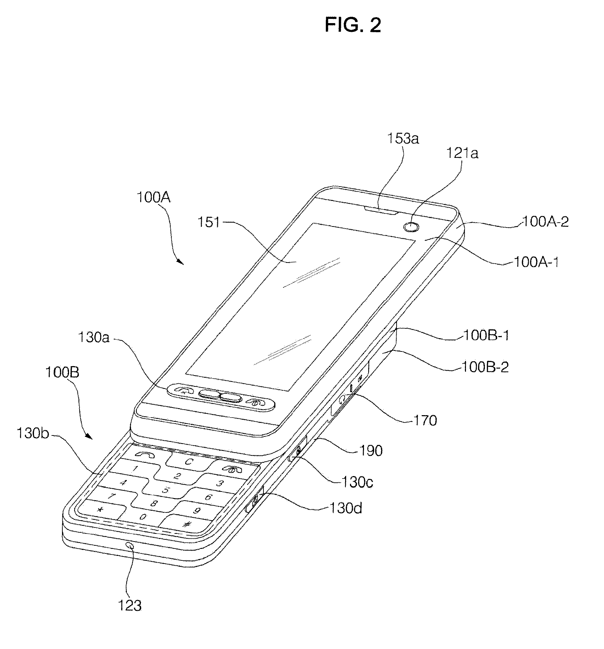

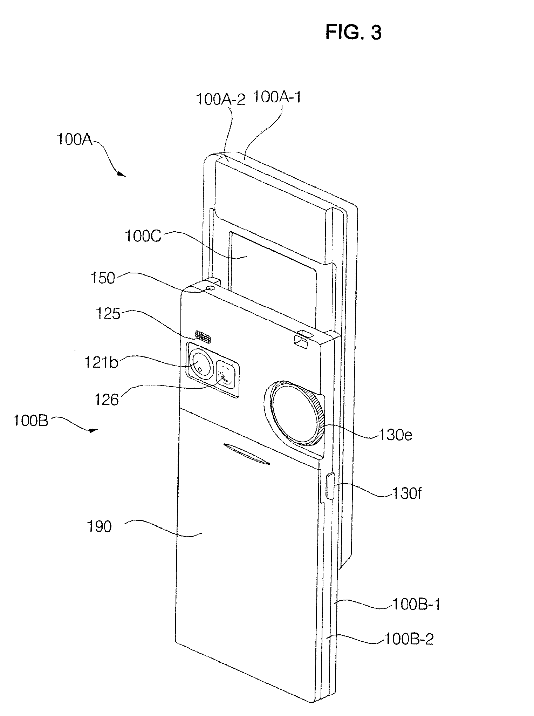

An exterior of the mobile terminal 100 will now be described in detail with reference to FIGS. 2 and 3. For convenience, the mobile terminal 100 is assumed to be a slide-type mobile terminal equipped with a touch screen. However, the present invention is not restricted to a slide-type mobile terminal. Rather, the present invention can be applied to various mobile phones, other than a slider-type mobile terminal.

In more detail, FIG. 2 is a front perspective view of the mobile terminal 100 shown in FIG. 1. Referring to FIG. 2, the mobile terminal 100 includes a first body 100A and a second body 100B. The first and second bodies 100A and 100B are also configured to be able to slide up and down on each other. Also, when the mobile terminal 100 is closed, the first body 100A and the second body 100B overlap each other. On the other hand, referring to FIG. 2, when the mobile terminal 100 is opened, the second body 100B is at least partially exposed below the first body 100A.

When the mobile terminal 100 is closed, the mobile terminal can operate in a standby mode and be released from the standby mode in response to user manipulation. On the other hand, when the mobile terminal 100 is opened, the mobile terminal 100 can operate in a call mode and be switched to the standby mode either manually in response to user manipulation or automatically after the lapse of a predefined amount of time. The exterior of the first body 100A is also defined by a first front case 100A-1 and a first rear case 100A-2. Various electronic devices are installed in the space formed by the first front case 100A-1 and the first rear case 100A-2. At least one intermediate case may also be additionally provided between the first front case 100A-1 and the first rear case 100A-2. Further, the first front case 100A-1 and the rear case 100A-2 may be formed of a synthetic resin through injection molding. Alternatively, the first front case 100A-1 and the rear case 100A-2 may be formed of a metal such as stainless steel (STS) or titanium (Ti).

The display module 151, a first audio output module 153a, a first camera 121a and a first user input unit 130a are also disposed in the first front case 100A-1. Examples of the display module 151 include an LCD and an OLED which can visualize information. Also, because a touch pad is configured to overlap the display module 151 and thus to form a layer structure, the display module 151 serves as a touch screen. Thus, it is possible to input various information to the mobile terminal 100 simply by touching the display module 151.

In addition, the first audio output module 153a may be implemented as a receiver or a speaker, and the first camera 121a may be configured to capture a still image or a moving image of the user. Further, the exterior of the second body 100B is defined by a second front case 100B-1 and a second rear case 100B-2. A second user input unit 130b is also disposed at the front of the second front case 100B-1, and third and fourth user input units 130c and 130d, the microphone 123 and the interface unit 170 can be disposed in the second front case 100B-1 or the second rear case 100B-2.

Further, the first through fourth user input units 130a through 130d may be collectively referred to as the user input unit 130, and the user input unit 130 may adopt various manipulation methods including tactile feedback to the user. For example, the user input unit 130 may be implemented as a dome switch or a touch pad which receives a command or information upon being pushed or touched by the user. Alternatively, the user input unit 130 may be implemented as a wheel, a jog dial, or a joystick. In addition, the first user input unit 130a allows the user to input such commands as 'start', 'end', and 'scroll', the second user input unit 130b can be used to input numerals, characters or symbols, and the third and fourth user input units 130c and 130d can be used as hot keys for activating certain functions of the mobile terminal 100. Also, the microphone 123 is configured to receive the voice of the user or other sounds.

Next, FIG. 3 is a rear perspective view of the mobile terminal 100 shown in FIG. 2. Referring to FIG. 3, a fifth user input unit 130e and a second camera 121b are disposed at the rear of the second rear case 100B-2 of the second body 100B. Further, the fifth user input unit 130e is a wheel type input unit. A sixth user input unit 130f is also disposed on one side of the second body 100B. Further, the second camera 121b may have a different photographing direction from that of the first camera 121a shown in FIG. 2. In addition, the first and second cameras 121a and 121 b may have different resolutions. For example, the first camera 121a may be used to capture and then transmit an image of the face of the user during a video call, and thus, a low-resolution camera may be used as the first camera 121a. The second camera 121b may be used to capture an image of an ordinary subject. Since images captured by the second camera 121b generally do not need to be transmitted, a high-resolution camera may be used as the second camera 121b.

In addition, a camera flash 125 and a mirror 126 are disposed near the second camera 121b. The camera flash 125 can be used to illuminate a subject when the second camera 121b captures an image of the subject. The user may also look in the mirror 126 and prepare himself or herself for taking a self shot. A second audio output module may also be additionally provided in the second rear case 100B-2, and thus realize a stereo function along with the first audio output module 153a. The second audio output module may also be used during a speaker-phone mode.

An antenna for receiving a broadcast signal may also be disposed on one side of the second rear case 100B-2. The antenna may be installed so as to be able to be retracted from the second rear case 100B-2. In addition, a slide module 100C is disposed between the first body 100A and the second body 100B and couples the first body 100A and the second body 100B so as the bodies can be slide up and down on each other. Referring to FIG. 3, when the mobile terminal 100 is opened, part of the slide module 100C is exposed on the first rear case 100A-2 of the first body, and the rest of the slide module 100C is hidden by the second front case 100B-1 of the second body 100B.

Further, the second camera 121b and the fifth and sixth user input units 130e and 130f are illustrated in FIG. 3 as being provided on the second body 100B, but the present invention is not restricted to this. For example, at least one of the second camera 121 b and the fifth and sixth user input units 130e and 130f may be mounted on the first body 100A, and particularly, the first rear case 100A-2. In this instance, whichever of the second camera 121b and the fifth and sixth user input units 130e and 130f are mounted on the first rear case 100A-2 may be protected by the second body 100B. In addition, the first camera 121a may be configured to be rotatable and thus to cover the photographing direction of the second camera 121b. In this instance, the second camera 121b may be optional. Further, the power supply unit 190 is disposed in the first rear case 100A-2, and may be a rechargeable battery and be coupled to the first rear case 100A-2 so as to be attachable to or detachable from the first rear case 100A-2.

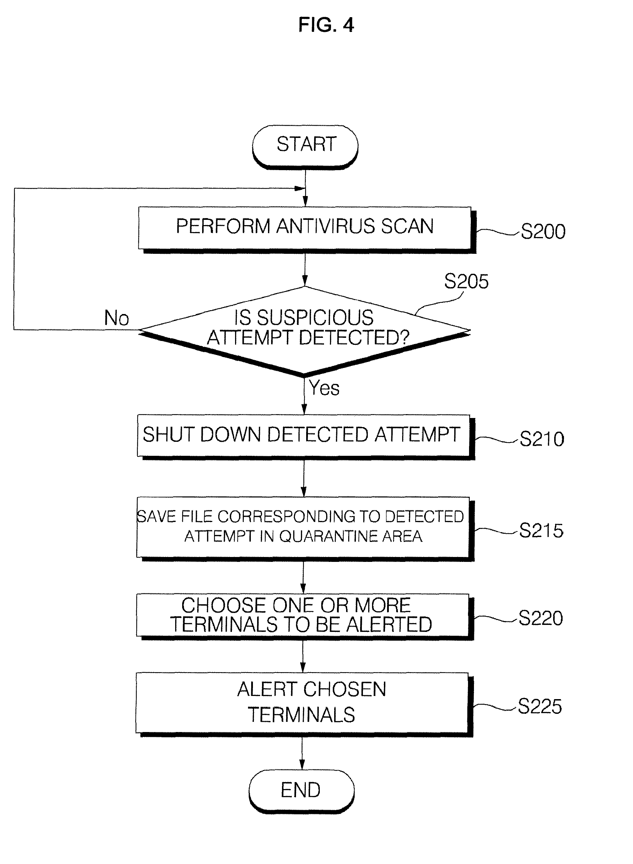

Next, FIG. 4 is a flowchart illustrating a method of controlling an operation of a mobile terminal according to a first embodiment of the present invention. Referring to FIG. 4, the controller 180 performs an antivirus scan by running antivirus software periodically or continuously in the background (S200). If a suspicious attempt that may have been caused by a virus is detected by the antivirus scan (Yes in S205), the controller 180 shuts down the detected attempt (S210). Examples of the detected attempt include an attempt to activate short-range communication or the wireless Internet without the user's permission, an attempt to switch from one operating mode to another operating mode without the user's permission, an attempt to make a long-distance call without the user's permission and an attempt to generate too many messages within a short period of time.

Thereafter, the controller 180 saves a file responsible for the detected attempt in a quarantine area (S215). Then, the file may be subjected to user inspection and be either deleted or cured. In addition, the controller 180 may ask the user to decide whether to report the file to an antivirus software provider and then perform an appropriate operation according to the user's decision. The controller 180 then chooses one or more other terminals to be alerted (S220), and notifies the chosen terminals that the mobile terminal 100 is infected (S230). Further, if the chosen terminals are not equipped with any antivirus software or if the chosen terminals are equipped with antivirus software but the antivirus software cannot handle a virus detected from the mobile terminal 100, the controller 180 can alert the chosen terminals in order to prevent the chosen terminals from being infected by the virus detected from the mobile terminal 100 and thus to prevent the virus detected from the mobile terminal 100 from spreading.

The controller 180 can also provide antivirus software that can handle the virus detected from the mobile terminal 100 and virus pattern data for detecting the virus detected from the mobile terminal 100 to the chosen mobile terminals. In operation S220, the controller 180 can choose one or more mobile terminals to be alerted with reference to a call list, a received/sent message list, a contact list, and the history of access to a network. That is, once the mobile terminal 100 is infected, one or more mobile terminals that can be also infected by the same virus as that detected from the mobile terminal 100 can be alerted and thus be allowed to perform an antivirus scan and to remove viruses, if any, detected by the antivirus scan.

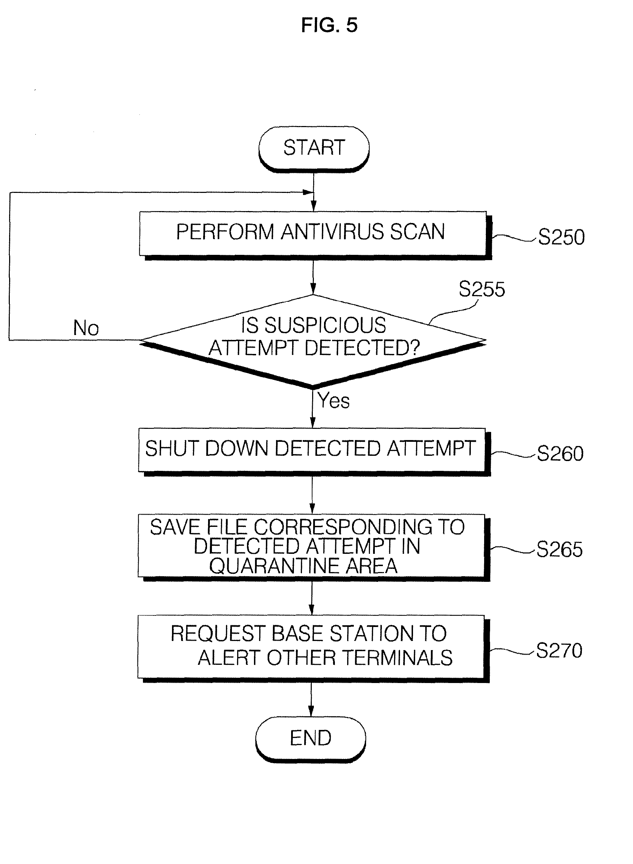

Next, FIG. 5 is a flowchart illustrating a method of controlling an operation of a mobile terminal according to a second embodiment of the present invention. Referring to FIG. 5, operations S250 through S265 are the same as their respective counterparts of FIG. 4, and thus, detailed descriptions thereof will be omitted. After the controller 180 saves a file responsible for an attempt shut down in a quarantine area (S265), the controller 180 requests a base station to notify other mobile terminals that the mobile terminal 100 is infected (S270). That is, in the second embodiment, the controller 180 notifies the base station that the mobile terminal 100 is infected, and allows the base station to choose one or more terminals to be alerted and then to notify the chosen terminals that the mobile terminal 100 is infected, whereas, in the first embodiment, the controller 180 directly notifies the chosen mobile terminals that the mobile terminal 100 is infected. The mobile terminal 100 can also send a list of the other mobile terminals to be notified to the base station.

The controller 180 can also transmit the mobile terminal 100's history of infection with viruses during a predetermined period of time in the past to the base station. The base station can then provide antivirus software that can handle the virus detected from the mobile terminal 100, virus pattern data for detecting the virus detected from the mobile terminal 100 and information regarding the mobile terminal 100 to the chosen mobile terminals. Thus, once the mobile terminal 100 is determined to be infected, the controller 180 allows a base station to alert one or more mobile terminals that can be affected by the virus infection of the mobile terminal 100 and therefore enable the alerted mobile terminals to perform an antivirus scan and to remove viruses, if any, detected by the antivirus scan.

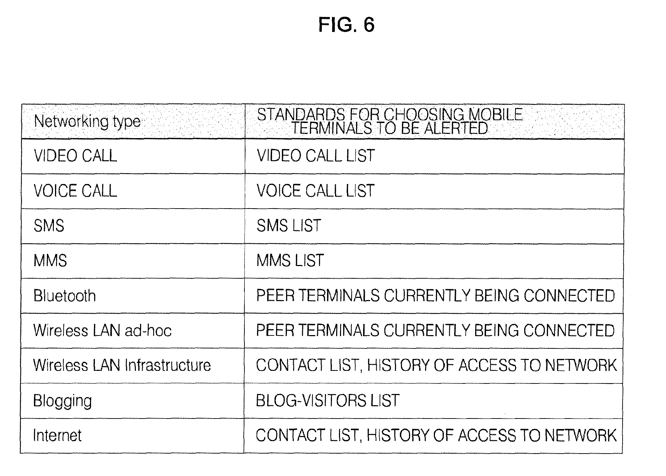

Next, FIG. 6 is a table showing how to choose a number of mobile terminals to be alerted when the mobile terminal 100 is determined to be infected. Referring to FIG. 6, if the mobile terminal 100 is determined to be infected in connection with a video call, a voice call, a short messaging service (SMS) or a multimedia messaging service (MMS), a number of mobile terminals listed in a video call list, a voice call list, an SMS list or an MMS list may be chosen to be alerted.

Further, if the mobile terminal 100 is determined to be infected in connection with a Bluetooth mode or a wireless local area network (WLAN) ad-hoc mode, one or more peer mobile terminals currently being connected to the mobile terminal 100 can be chosen to be alerted. If the mobile terminal 100 is determined to be infected in connection with a blogging operation, a number of mobile terminals can be chosen to be alerted with reference to a blog visitor list, and if the mobile terminal 100 is determined to be infected in connection with a WLAN infrastructure mode or the Internet, a number of mobile terminals can be chosen to be alerted with reference to a contact list or the history of access to a network. Each of the above-mentioned standards for choosing a number of mobile terminals to be alerted when the mobile terminal 100 is determined to be infected can be used independently or in combination. Various standards other than those set forth herein may also be used to alert one or more mobile terminals that can be affected by the virus infection of the mobile terminal 100.

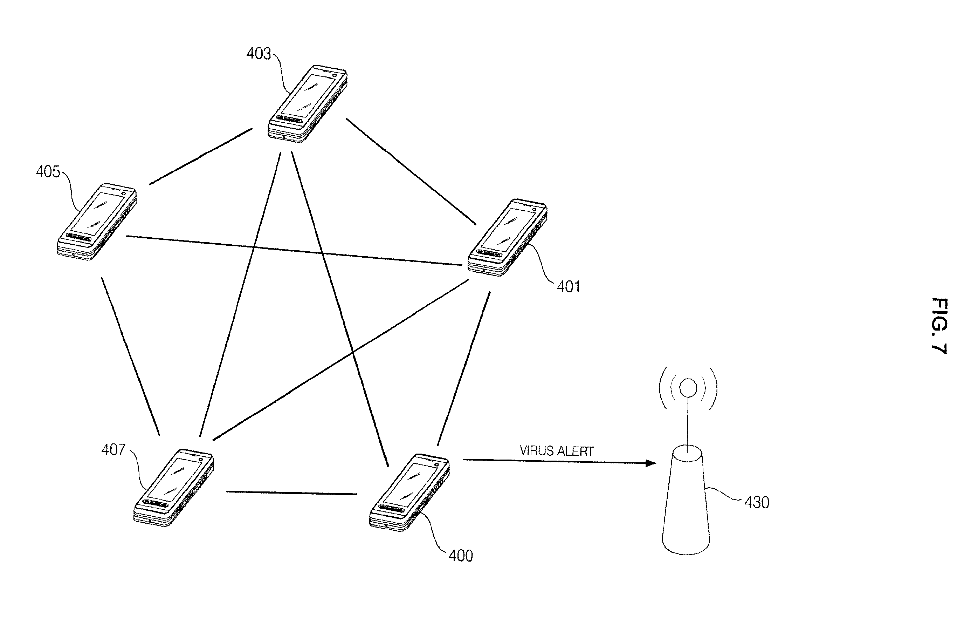

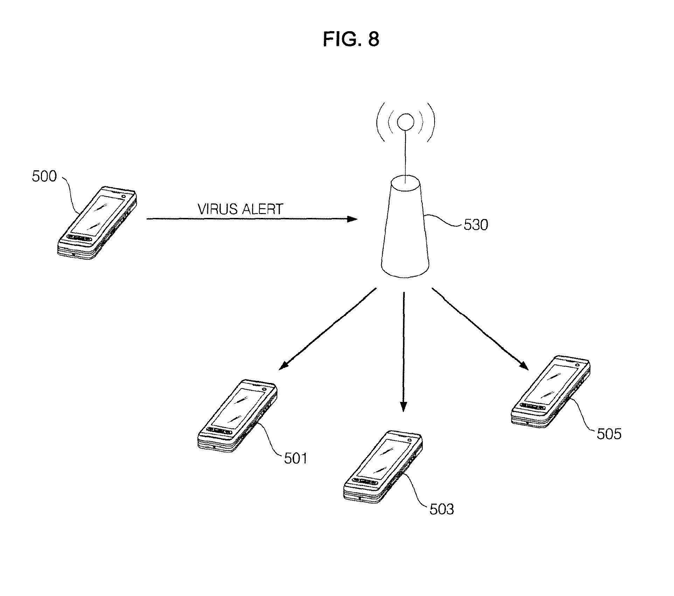

Next, FIGS. 7 and 8 are diagrams of mobile terminals in a communication system for explaining the methods of the first and second embodiments. More specifically, FIG. 7 is a diagram showing how to alert a plurality of peer mobile terminals 401, 403, 405 and 407 when a first mobile terminal 400 is connected to the peer mobile terminals 401, 403, 405 and 407 in a WLAN ad-hoc mode and is determined to be infected. Referring to FIG. 7, if the first mobile terminal 100 is determined to be infected while peer-to-peer communicating with the peer mobile terminals 401, 403, 405 and 407 through Bluetooth without a requirement of a base station, the peer mobile terminals 401, 403, 405 and 407 can be notified that the first mobile terminal 100 is infected. In addition, the peer mobile terminals 401, 403, 405 and 407 may be provided with antivirus software. Alternatively, the peer mobile terminals 401, 403, 405 and 407 can be notified to download antivirus software. The first mobile terminal 400 can also alert the peer mobile terminals 401, 403, 405 and 407 through Bluetooth or a base station 430.

Next, FIG. 8 is a diagram of mobile terminals in a communication system showing how to alert a plurality of mobile terminals 501, 503 and 505 through a base station 530 when a mobile terminal 500 is determined to be infected. The mobile terminal 500 may need to process a considerable amount of data in order to directly notify, for example, about 200-300 mobile terminals listed in a call list, especially when they are more than one hop away from the mobile terminal 500. In addition, the direct notification of as many mobile terminals by the mobile terminal 500 may cause a considerable amount of network traffic, and may incur excessive access charges.

Referring to FIG. 8, in order to address the above-mentioned problems, the mobile terminal 500 notifies the base station 530 of its infection with a virus. Then, the base station 530 notifies the mobile terminals 501, 503, and 505 of the virus infection of the mobile terminal 500. In this instance, an SMS center (SMSC) to which the base station 530 is connected can examine the mobile terminal 500's history of transmission of messages, choose a number of mobile terminals based on the results of the examination, and alert the chosen mobile terminals. The mobile terminal 500 can also transmit its history of infection with viruses during a predetermined period of time in the past to the base station 530.

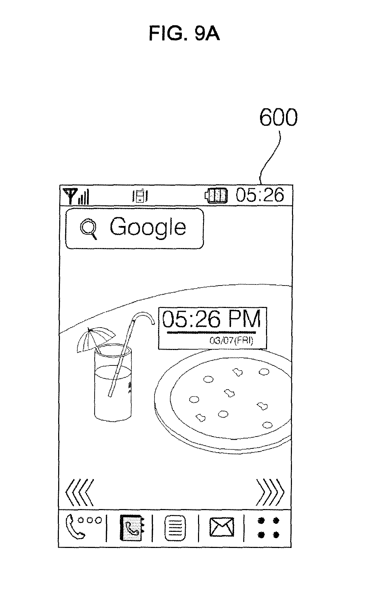

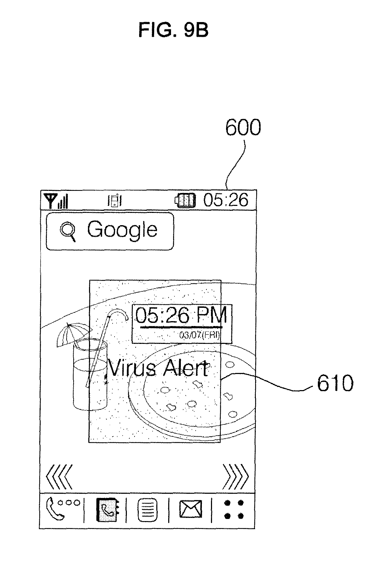

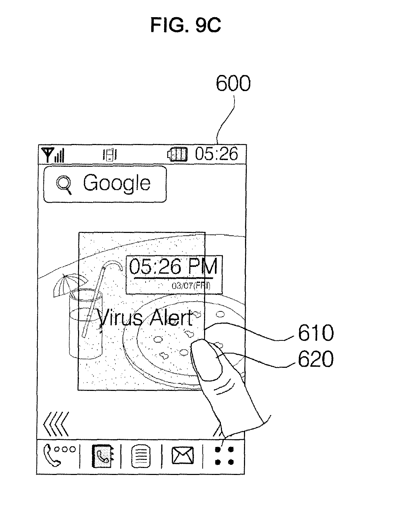

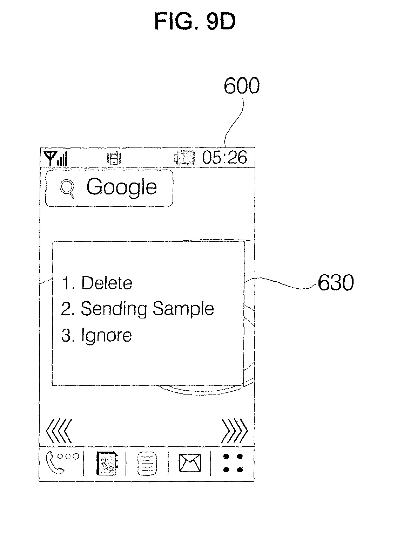

Next, FIGS. 9A-9D are overviews of display screens showing how the mobile terminal 100 can detect and handle viruses. Referring to FIGS. 9A and 9B, if a suspicious attempt that may have been caused by a virus is detected from the mobile terminal 100 when an operating screen 600 is displayed on the display module 151, a virus alert window 610 is displayed over the operating screen 600 as a transparent window. Referring to FIGS. 9C and 9D, if the user touches the virus alert window 610, as indicated by reference numeral 610 or 620, the virus alert window 610 is activated, and thus be transformed into an opaque virus-related menu window 630. If the user chooses a menu item 'Delete' from the virus-related menu window 630, a file corresponding to the detected attempt is deleted.

In addition, if the user chooses a menu item 'Sending Sample' from the virus-related menu window 630, a sample regarding the detected attempt is sent to an antivirus software provider. If the user chooses a menu item 'Ignore' from the virus-related menu window 630, the detected attempt is ignored. The mobile terminal 100 can also automatically notify other mobile terminals of its infection with a virus as soon as the user chooses any one of the menu items of the virus-related menu window 630.

Further, the mobile terminal and corresponding control method according to embodiments of the present invention are not restricted to the embodiments set forth herein. Therefore, variations and combinations of the exemplary embodiments set forth herein may fall within the scope of the present invention. The present invention can also be realized as code that can be read by a processor (such as a mobile station modem (MSM)) included in a mobile terminal and that can be written on a computer-readable recording medium. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and data transmission through the Internet. The computer-readable recording medium can be distributed over a plurality of computer systems connected to a network so that computer-readable code is written thereto and executed therefrom in a decentralized manner. Functional programs, code, and code segments needed for realizing the present invention can be easily construed by one of ordinary skill in the art.

As described above, according to embodiments of the present invention, if a mobile terminal is determined to be infected, other mobile terminals that can also be infected can be alerted and thus be able to perform an antivirus scan and remove viruses, if any, detected by the antivirus scan. Therefore, it is possible to prevent the spread of viruses and the reinfection of a mobile terminal with viruses. Thus, it is possible to prevent from an infected mobile terminal from infecting other mobile terminals connected thereto. Therefore, various problems such as the reinfection of mobile terminals with viruses are solved.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

## Claims

1. A method of controlling a mobile terminal, the method comprising:
detecting, via a controller, a suspicious attempt that may have been caused by a virus from the mobile terminal;
shutting down the detected attempt;
choosing one or more terminals that are associated with the mobile terminal; and
notifying, via an alarm unit, said one or more chosen other terminals that the mobile terminal is infected.

2. The method of claim 1, wherein the choosing said one or more other terminals comprises referencing at least one of a call list, a received/sent message list, a contact list, and a history of access to a network included on the mobile terminal.

3. The method of claim 1, wherein the choosing said one or more other terminals comprises choosing one or more other terminals connected to the mobile terminal via a short-range communication or a wireless Internet communication.

4. The method of claim 1, wherein the notifying the one or more terminals comprises:
requesting a base station to notify the chosen one or more other terminals that the mobile terminal is infected.

5. The method of claim 1, further comprising:
outputting a sensing signal indicating the detected suspicious attempt.

6. The method of claim 5, wherein the outputting of the sensing signal comprises displaying a message indicating the detected suspicious attempt in a semitransparent window.

7. The method of claim 6, further comprising:
displaying a menu for at least one of deleting a file corresponding to the detected suspicious attempt, sending a sample regarding the detected suspicious attempt to an antivirus software provider and ignoring the detected suspicious attempt, if the message is touched.

8. The method of claim 1, wherein the detected attempt includes an attempt to activate short-range communication or a wireless Internet without a user's permission, an attempt to switch from one operating mode to another operating mode without the user's permission, an attempt to make a long-distance call without the user's permission and an attempt to generate greater than a predetermined number of messages within a short period of time.

9. The method of claim 1, further comprising:
saving a file corresponding to the detected suspicious attempt in a quarantine area.

10. The method of claim 1, further comprising
transmitting antivirus software to the chosen one or more other terminals.

11. A mobile terminal, comprising:
a wireless communication unit configured to wirelessly communicate with at least one other terminal;
a controller configured to detect a suspicious attempt that may have been caused by a virus from the mobile terminal, to shut down the detected attempt, and to chose one or more other terminals that are associated with the mobile terminal; and
a notifying unit configured to notify said chosen one or more other terminals that the mobile terminal is infected.

12. The mobile terminal of claim 11, wherein the controller is further configured to choose said one or more other terminals by referencing at least one of a call list, a received/sent message list, a contact list, and a history of access to a network included in a memory on the mobile terminal.

13. The mobile terminal of claim 11, wherein the notifying unit is further configured to request a base station to notify the chosen one or more other terminals that the mobile terminal is infected.

14. The mobile terminal of claim 11, further comprising:
an outputting unit configured to output a sensing signal indicating the detected suspicious attempt.

15. The mobile terminal of claim 14, wherein the outputting unit comprises a display unit configured to display a message indicating the detected suspicious attempt in a semitransparent window.
